(19) **Europäisches Patentamt**

**European Patent Office**

**Office européen des brevets**

(11) **EP 1 047 887 B1**

(12) **EUROPEAN PATENT SPECIFICATION**

(45) Date of publication and mention
of the grant of the patent:
**29.10.2003 Bulletin 2003/44**

(51) Int Cl.⁷: **F16H 25/06**, F16H 49/00

(86) International application number:
**PCT/TR99/00001**

(21) Application number: **99906670.7**

(22) Date of filing: **14.01.1999**

(87) International publication number:
**WO 99/036711 (22.07.1999 Gazette 1999/29)**

(54) **FREE STANDING TEETH (FST) GEAR REDUCER**

GETRIEBE-UNTERSETZUNG MIT SCHWIMMENDEN ZAHNELEMENTEN

ENGRENAGE REDUCTEUR A DENTS FLOTTANTES

(84) Designated Contracting States:
**AT BE CH DE DK ES FR GB IT LI NL PT SE**

(30) Priority: **14.01.1998 TR 1998063**

(43) Date of publication of application:
**02.11.2000 Bulletin 2000/44**

(73) Proprietor: **Altug, Kemal Sürkü**
**06500 Ankara (TR)**

(72) Inventor: **Altug, Kemal Sürkü**
**06500 Ankara (TR)**

(74) Representative:
**Hengelhaupt, Jürgen D., Dipl.-Ing. et al**
**Gulde Hengelhaupt Ziebig,**
**Schützenstrasse 15-17**
**10117 Berlin (DE)**

(56) References cited:
**EP-A- 0 201 730**        **EP-A1- 0 196 650**
**DE-C- 341 053**          **FR-A1- 2 427 519**

EP 1 047 887 B1

## Description

This invention relates to a gear system according to claim 1.

On rotating machines and equipments in various industry sectors, gear reducer has been used to convert different rotating speed or torques, which is needed.

The type of gear reducers is determined according to its characteristics such as gear ratio, torque, efficiency, toughness, volume, lightness wear resistance of teeth, ergonomy, noise level etc. by taking into consideration the importance of the place where it is used.

In last years new type of gear reducers have been developed having different qualities for various purposes.

It is important for gear reducers and gear boxes higher gear ratio, lower volume and lighter weight. Whenever the gear ratio increases on pairs of spur gears weight, volume and number of stage increases too. On worm gears, which provide higher gear ratio, weight and volume decrease regard to spur gears. However dimensions increase while gear ratio and torques as needed in these types of gears. In this gear systems the volume is used so efficiently that the system is set into the middle of internal gear to cover little volume. This characteristic also provides the gear reducer placing into motor cover or into the machine, which is turned.

The number of meshed tooth is one, on a gear, which is placed in conventional gear systems (eg. external and internal spur gears, worm gear system). This number reaches 2 or 3 on Globoid type worm gear systems. On planetary gear systems the number of loaded tooth depends on the number of planetary gears and reaches up to 5. However the number of loaded tooth is 10 % of the number of tooth at least depending on number of eccentric element on this system. This characteristic provides reducing pressure on tooth surface and decreases wearing. And greater number of loaded tooth enable more load transmission and obtain greater amount of torque.

Any damaging or breaking on all type of present gears, upsets working or becomes completely out of work. But in this gear system, the teeth around of damaged tooth continue working because of having a great number of meshing teeth.

In conventional gear boxes, it is impossible to alter direction of output shaft rotation without changing direction of input shaft. But in this reducer, the output shaft can rotate in both two directions without to altering input shaft direction.

At high speed on planetary gear system, which can fit, into small volume, centrifugal forces come into existence depending on mass of planetary gears. This creates some bearing and lubrication problems. In this system great centrifugal forces do not appear because of not having rotating masses like planet gears.

On Harmonic Drive Gear Reducers which has high gear ratio, the gear named flexpline made from spring material has to be elastic deflection for forming of ellipsoidal shape. Thus the teeth of the gear mesh at least on two sections. This cause the difference number of teeth is 2 or more between meshing two gears. But the construction of this gear system gives possibility meshing with one section between two meshing gears. That is the internal gear can be meshed with external gear by just an eccentric element thus it is obtained at least two fold gear ratio regard to harmonic drive gear reducer.

On harmonic drive gear systems the more power and torque increase the thickness of the gear made from spring material increase and thus the more spring force to overcome. But on this gear system the gears external and internal do not transform but only a small spring in every indepened tooth show resistance. For this reason power is transmission in high efficiency.

There are known gear system and gear reducers having eccentric elements, like from DE 341053 C, FR 2427519 A1, EP 201 730 A1 and EP 196650 A1. In such systems having eccentric elements on a wave generator and sliding teeth (needles, pins or rods) functioning as an external gear's teeth, the route of the movement or torque transmitting in these reducers, starts from the input shaft inside the wave generator to the output shaft radially. Radial arrangements of elements in reducers cause some difficulties such as thinner input shafts and ratio (gear ratio) compared to the system of the present invention. Putting the input shaft inside the wave generator disc limits the diameter of the input shaft. On the other hand, it is impossible to place the same amount of sliding (movable) teeth (pins or rods) on the ring working as an external gear instead of the ring as an internal gear (in a similar pitch diameter). Another problem to be solved is heat and wear occurring on the contact points and surfaces due to existence of small areas. In addition to these problems, the existence of relatively complex parts increases the costs of manufacturing.

On conventional gears, damage or wearing on teeth causes gear to be replaced. However in this gear reducer each of independed tooth and every parts of the system can be replaced one by one if necessary. This causes reducing the duration and cost of repair very much and also increases the reducer life.

As independed tooth can be produced without having special tool easily in mass, this reduces production periods and costs.

The structure of this system is neither fully rigid nor elastic deflecting. In general it has to explain in a rigid system having linear moving parts.

Brief description of drawings :

Drw. 1 : Drive ring having one ellipsoidal cam(wave generator)
" 2 : Drive ring having two ellipsoidal cam(wave generator)
" 3 : Drive ring having roller element(wave generator)
" 7a : Reducer which FST is being an internal gear (Section front view)
" 7b : Section side view of Drw 7a. (showing without housing)
" 10 : A different arrangement from Drw. 7a, 7b
" 11 : Another arrangement of the basic parts of the reducer

The system has three basic parts, which are an internal gear, an external gear mounted in it and a wave generator(drive ring). For the motion i.e.teeth of internal gear can be movable freely and fixing of one of three basic elements on.

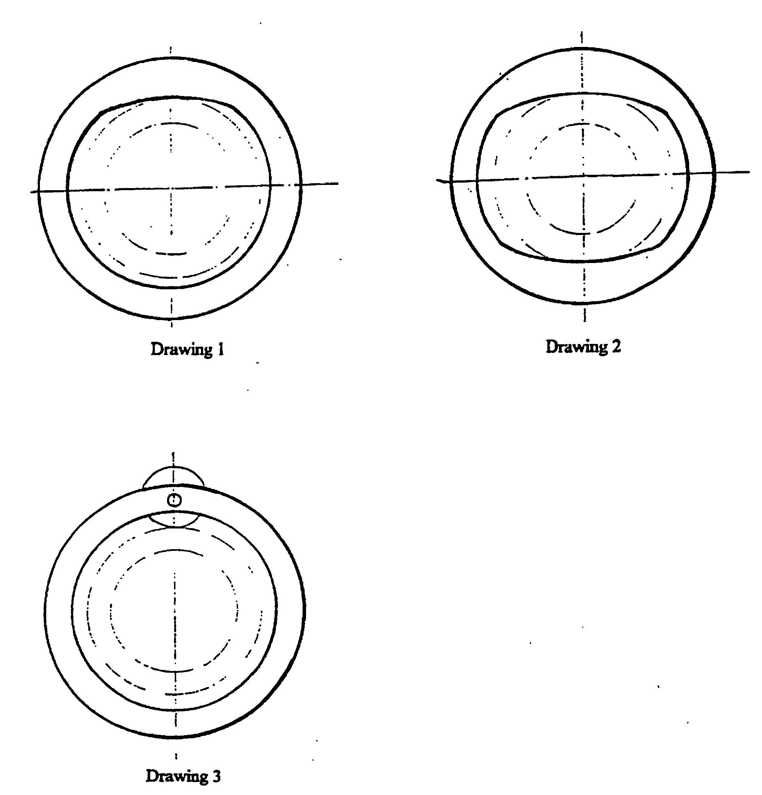

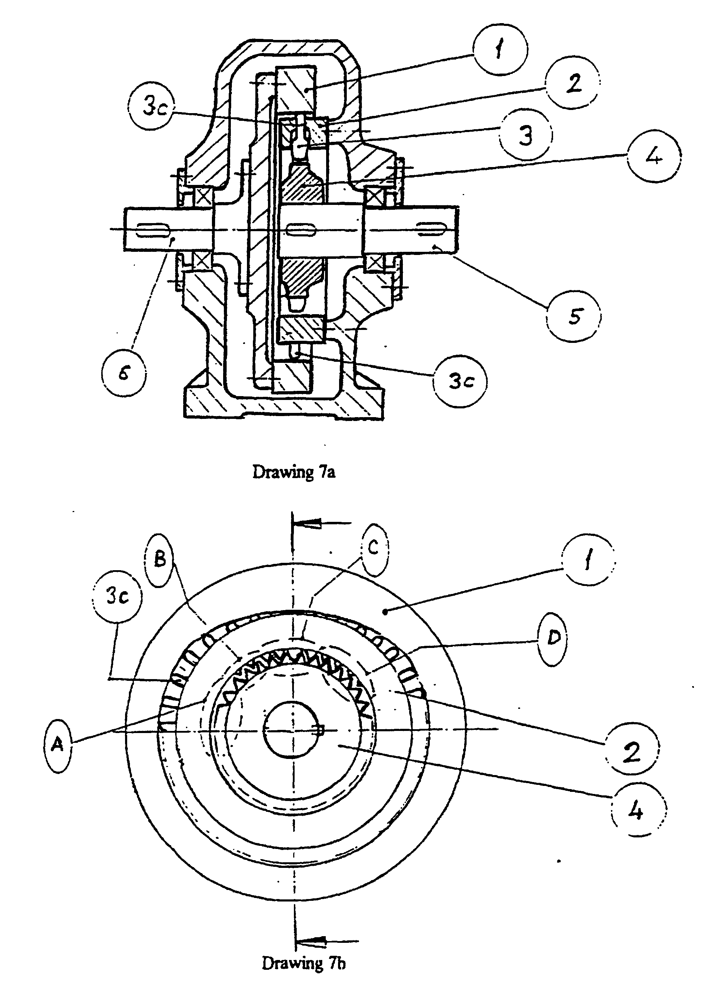

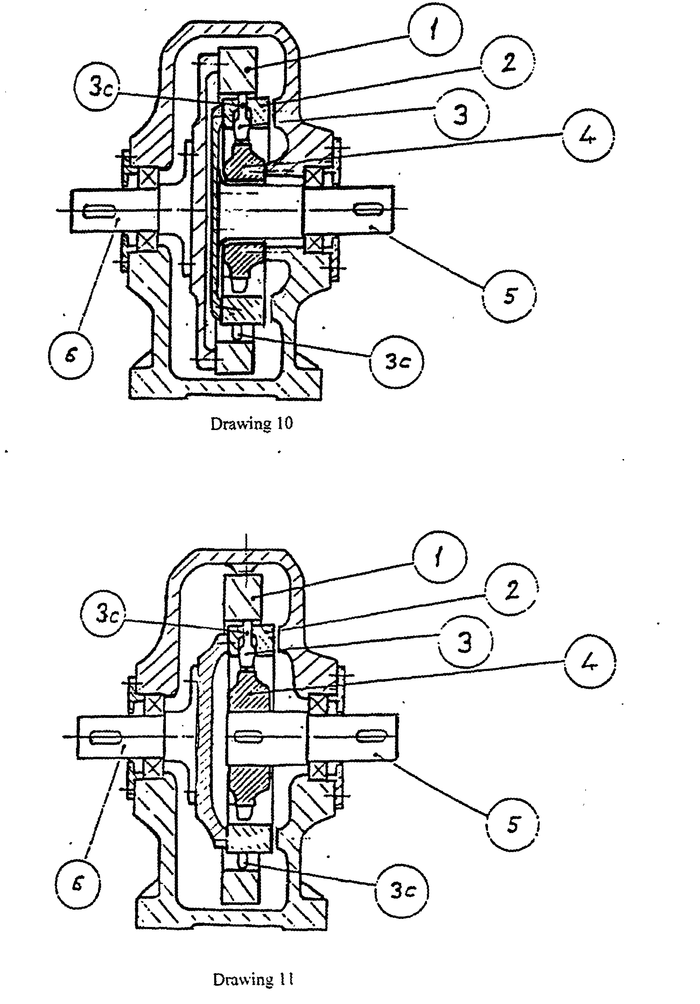

The principal of motion of the reducer has been described in sample on drawing 7a, 7b. On the drawing the input shaft, which is coupled with power unit (ie. motor), is connected to a wave generator(drive ring)(No:1) which is shaped ellipsoidal cam and output shaft is connected to the external gear (No: 4).

The carrier ring functioned as an internal gear (No: 2) is fixed. The drive ring (wave generator) may also be shaped in several types as in drawing 2, 3. The carrier ring which is inside of the wave generator(drive ring) contains teeth (No: 3) placed surroundingly which are movable in their holes freely. The teeth named free standing teeth(FST) which are not put into motion yet by cam on the wane generator(drive ring), are pulled into their holes position by their own springs into the holes. And in the mean time the stems of these teeth are projected outside from the carrier ring.

In this sample(Drw. 7a, 7b) the carrier ring is fixed to the reducer housing. I mean the internal gear is fixed. The external gear (No: 4), located inside of the carrier ring is coupled with the output shaft. All these parts a.m. are placed in reducer housing and the input shaft (No: 6) and the output shaft are equipped with rolling contact bearing at both two side of the reducer body.

When the input shaft turns, cause turning the wave (drive ring). The stems of the free standing teeth which contact to the ellipsoidal cam start moving towards the external gear and begin meshing to its teeth (Drw. 7b, Area B). The free standing teeth which are pressed by center area of the cam have been meshed the external gear's teeth. The teeth which the pressure of the cam is decreased by the continuation of the movement, are released from the external gear teeth by the effect of spring force and they are drawn into their holes in the carrier ring (Drw. 7b, Area D).

Since the number of teeth(FST) in the carrier ring are more than the number of teeth of the external gear, the movement a.m. makes the output shaft connected to external gear; rotates counter direction of the input shaft in difference number of these teeth of the these mating gears. For example let's assume that the number of teeth in the carrier ring is $Z_1$=251 and the number of teeth on external gear inside of the carrier ring is $Z_2$=250.

The result the gear ratio will be:

$$i=Z_2/(Z_2-Z_1)$$

$$i=250/(250-251)=250/-1=-250$$

The minus sign of gear ratio shows the output shaft turns counter direction of input shaft turns.

The output shaft a.m. turns counter direction of input shaft. When the parts (Drw. 7a, 7b) are used again and the input shaft is connected to wave generator (drive ring) and output shaft is connected to the carrier ring and the external gear inside of the carrier ring is fixed (Drw. 10) in this situation the output shaft turns in the same direction of input shaft turning. In addition to these alternatives it is possible to connect the carrier ring to the input shaft and fixing wave generator(drive ring)(Drw. 11). In this situation the input and output shafts turns same direction.

It is possible to place the teeth(FST) in sequence on the carrier disk in one or more rows (zigzag form). This type of location ca be applied when the free standing teeth are formed as an internal gear's teeth in order to increase strength of teeth holes.

The FST gear reducer is used on rotating machines in industry in the need of high torque and great gear ratio in little volume and added on precision, angular and linear movement mechanism and calibration systems.

**Claims**

**1.** A gear system comprising:

- an input shaft (6) and an output shaft (5);
- a carrier ring (2) functioning as an internal gear having freely movable teeth (3), the teeth (3) being arranged in a circumferentially distributed manner in the carrier ring (2) so as to move alternately outside to an external gear (4) provided with external gear teeth,
- said external gear (4) is located radially inside said carrier ring (2),
- a wave generator (1) which is placed radially outside over said carrier ring (2) and which includes at least one eccentric element cooperating with said teeth stems (3c).

2. A gear system according to claim 1, **characterized in that** the number of said freely movable teeth (3) is bigger than the number of said external gear (4) teeth.

3. A gear system according to claim 1 or 2, **characterized in that** one element out of external gear (4), carrier ring (2) and wave generator (1) is fixed and the two remaining elements are connected to the input shaft (6) and the output shaft (5).

4. A gear system according to claim 1 to 3, **characterized in that** the system is mounted in a driver or driven machine housing without having an own housing.

5. A gear system according to one of the preceding claims, **characterized in that** said freely movable teeth (3) are pulled away from said external gear (4) by springs.

6. A gear system according to one of the preceding claims, **characterized in that** said freely movable teeth (3) have stems (3c), which extend radially outside the said carrier ring (2).

7. A gear system according to claim 6, **characterized in that** said eccentric element pushes alternatively said freely movable teeth stem (3c) which start moving towards said external gear (4) and begin meshing with the external's gear teeth when said eccentric element begins to turn.

8. A gear system according to one of the preceding claims, **characterized in that** the said external gear (4) is connected to said output shaft (5) and said wave generator to said input shaft.

9. A gear system according to one of the preceding claims, **characterized in that** free standing teeth are arranged in two or more zigzag formed rows.

**Patentansprüche**

1. Getriebesystem mit:

    - einer Antriebswelle (6) und einer Abtriebswelle (5) ;

    - einem Tragring (2), der als Innenrad wirkt, das frei bewegliche Zähne (3) aufweist, die Zähne (3) sind über den Umfang verteilt im Tragring (2) angeordnet, so daß sie sich abwechselnd nach außen bewegen können, zu einem Außenrad (4) hin, das mit einer Außenverzahnung versehen ist,

    - das Außenrad (4) ist radial innerhalb des besagten Tragrings (2) angeordnet,

    - einem Schwingungserzeuger (1), der radial außerhalb über dem Tragring (2) plaziert ist und der mindestens ein exzentrisches Element umfaßt, das mit den Stegen (3c) der frei beweglichen Zähne (3) zusammenwirkt.

2. Getriebesystem nach Anspruch 1, **dadurch gekennzeichnet, daß** die Anzahl der frei beweglichen Zähne (3) größer als die Anzahl der Zähne des Außenrades (4) ist.

3. Getriebesystem nach Anspruch 1 oder 2, **dadurch gekennzeichnet, daß** mindestens eines der Elemente Außenrad (4), Tragring (2) und Schwingungserzeuger (1) fixiert ist und die zwei verbleibenden Elemente mit der Antriebswelle (6) und der Abtriebswelle (5) verbunden sind.

4. Getriebesystem nach Anspruch 1 bis 3, **dadurch gekennzeichnet, daß**. das System in einem Getriebegehäuse oder in dem Gehäuse einer getriebenen Maschine montiert ist, ohne über ein eigenes Gehäuse zu verfügen.

5. Getriebesystem nach einem der vorhergehenden Ansprüche, **dadurch gekennzeichnet, daß** die frei beweglichen Zähne (3) mit Hilfe von Federn von dem Außenrad (4) weggezogen werden.

6. Getriebesystem nach einem der vorhergehenden Ansprüche, **dadurch gekennzeichnet, daß** die frei beweglichen Zähne (3) Stege (3c) aufweisen, die radial aus dem Tragring (2) ragen.

7. Getriebesystem nach Anspruch 6, **dadurch gekennzeichnet, daß** das exzentrische Element abwechselnd den Steg (3c) der frei beweglichen Zähne (3) verschiebt, welche anfangen, sich in Richtung zu dem Außenrad (4) zu bewegen und beginnen, in die Zähne des Außenrades einzugreifen, wenn das exzentrische Element anfängt, sich zu drehen.

8. Getriebesystem nach einem der vorhergehenden Ansprüche, **dadurch gekennzeichnet, daß** das Außenrad (4) mit der Abtriebswelle (5) und der Schwingungserzeuger mit der Antriebswelle verbunden ist.

9. Getriebesystem nach einem der vorhergehenden Ansprüche, **dadurch gekennzeichnet, daß** die freistehenden Zähne in zwei oder mehr zickzackförmigen Reihen angeordnet sind.

## Revendications

1. Système d'engrenages comprenant :

   - un arbre primaire (6) et un arbre secondaire (5) ;
   - une couronne (2) qui agit comme un engrenage à dentures intérieures ayant des dentures libres de se déplacer (3), les dentures (3) étant réparties sur la circonférence de la couronne (2) de façon à se déplacer en alternance hors d'un engrenage à dentures extérieures (4), pourvu de dentures extérieures,
   - ledit engrenage à dentures extérieures (4). étant disposé radialement dans ladite couronne (2),
   - un générateur d'ondes (1) qui est positionné radialement à l'extérieur sur ladite couronne (2) et qui comprend au moins un élément excentrique coopérant avec lesdites tiges des dentures libres de se déplacer (3c).

2. Système d'engrenages selon la revendication 1, **caractérisé en ce que** le nombre desdites dentures libres de se déplacer (3) est plus grand que le nombre des dentures dudit engrenage à dentures extérieures (4).

3. Système d'engrenages selon la revendication 1 ou 2, **caractérisé en ce que** un des éléments engrenage à dentures extérieures (4), couronne (2) et générateur d'ondes (1), est fixe et les autres éléments sont connectés à l'arbre primaire (6) et à l'arbre secondaire (5).

4. Système d'engrenages selon la revendication 1 à 3, **caractérisé en ce que** le système est monté dans un logement de machine menant ou mené sans avoir son propre logement.

5. Système d'engrenages selon l'une quelconque des revendications précédentes, **caractérisé en ce que** lesdites dentures libres de se déplacer (3) sont écartées dudit engrenage à dentures extérieures (4) par des ressorts.

6. Système d'engrenages selon l'une quelconque des revendications précédentes, **caractérisé en ce que** lesdites dentures libres de se déplacer (3) ont des tiges (3c), qui s'étendent dans le sens radial hors de ladite couronne (2).

7. Système d'engrenages selon la revendication 6, **caractérisé en ce que** ledit élément excentrique pousse alternativement lesdites tiges des dentures libres de se déplacer (3c) qui commencent à se déplacer vers ledit engrenage à dentures extérieures (4) et commencent à s'engrener avec les dentures de l'engrenage à dentures extérieures quand ledit élément excentrique commence à tourner.

8. Système d'engrenages selon l'une quelconque des revendications précédentes, **caractérisé en ce que** ledit engrenage à dentures extérieures (4) est connecté audit arbre secondaire (5) et ledit générateur d'ondes est connecté audit arbre primaire.

9. Système d'engrenages selon l'une quelconque des revendications précédentes, **caractérisé en ce que** des dentures isolées sont arrangées dans deux ou plus que deux lignes en zigzag.

Drawing 1

Drawing 2

Drawing 3

Drawing 7a

Drawing 7b

Drawing 10

Drawing 11